## Europäisches Patentamt
## European Patent Office
## Office européen des brevets

(19)

(11) Veröffentlichungsnummer: **0 216 206 B1**

(12)

# EUROPÄISCHE PATENTSCHRIFT

(45) Veröffentlichungstag der Patentschrift: **27.11.91**

(51) Int. Cl.⁵: **G05D 16/16**

(21) Anmeldenummer: **86112094.7**

(22) Anmeldetag: **02.09.86**

(54) **Pneumatischer Regler.**

(30) Priorität: **11.09.85 DE 3532367**

(43) Veröffentlichungstag der Anmeldung:
**01.04.87 Patentblatt 87/14**

(45) Bekanntmachung des Hinweises auf die
Patenterteilung:
**27.11.91 Patentblatt 91/48**

(84) Benannte Vertragsstaaten:
**AT BE CH DE FR GB IT LI NL**

(56) Entgegenhaltungen:
**EP-A- 0 118 937**
**WO-A-80/01826**
**DE-C- 2 847 380**

(73) Patentinhaber: **Gulde-Regelarmaturen GmbH
& Co. KG
Mannheimer Strasse 63
W-6700 Ludwigshafen(DE)**

(72) Erfinder: **Albrecht, Bernd
Jahnstrasse 13
W-6719 Kerzenheim(DE)**
Erfinder: **Weber, Arno
Gerolfstrasse 16
W-6715 Lambsheim(DE)**
Erfinder: **Brand, Horst
Steingrundstrasse 39
W-6940 Weinheim/Bergstrasse(DE)**

(74) Vertreter: **Klose, Hans, Dipl.-Phys. et al
Kurfürstenstrasse 32
W-6700 Ludwigshafen(DE)**

**Beschreibung**

Pneumatischer Regler, insbesondere elektropneumatischer Stellungsregler, mit einem Gehäuse, mit einem Wandler, welchem ein Führungsgröße und ferner ein Ist-Wert zuführbar ist, und mit einem vom Druckmittel beaufschlagten Volumenverstärker, welcher von dem Wandler gesteuert wird.

In der DE-PS 28 47 380 ist ein druckmittelbetriebener Regler mit einem Wandler beschrieben, der eine Spiralfeder aufweist. Das eine Ende dieser Spiralfeder ist an einer Spannwelle befestigt und das andere Ende ist mit einem Druckmeßstift verbunden, der einerseits auf eine Prallplatte wirkt und andererseits mit dem Meßorgan des Führungswertes in Verbindung steht. Das eine Ende der Spiralfeder ist hierbei an einem Auge befestigt, das auf einer Spannwelle verdrehbar und feststellbar gelagert ist. Zur Einstellung des Nullpunktes wird eine Halterung, an welcher die Spiralfeder befestigt ist, auf der Welle verdreht. Die Spiralfeder ist auch nach dem Einbau des Reglers ggfs. auswechselbar. Ein entsprechender Platz- und Gewichtsbedarf ist erforderlich. Ferner werden für den Volumenverstärker bei hohem Platzbedarf relativ viele Einzelteile benötigt, was einer einfachen und kostengünstigen Fertigung entgegensteht.

Aus der PCT-Anmeldung mit der internationalen Veröffentlichungsnummer WO-80/01826 ist ein Wandler für einen pneumatischen Regler bekannt, der ein elektrostriktives Element in einem Düsen-Prallplattensystem aufweist. Dem elektrostriktiven Element wird über einen Vergleicher und einen Integrator die Differenz aus der Führungsgröße und dem Ist-Wert zugeführt, wobei der Abstand zwischen Prallplatte und Düse entsprechend veränderbar ist. Der vor der Düse herrschende Druck wird über einen Wandler in ein elektrisches Signal gewandelt, das dem Vergleicher als Ist-Wert zugeführt wird. Da die Kräfte eines derart ausgebildeten Biegewandlers im Vergleich zum Blasdruck der Düse klein sind, erweist sich die Rückwirkung infolge der Blaskraft als nachteilig.

Hiervon ausgehend liegt der Erfindung die Aufgabe zugrunde, den druckmittelbetriebenen Regler der eingangs genannten Art dahingehend weiterzubilden, daß bei einer einfachen und kostengünstigen Fertigung ein kompakter und gleichwohl funktionssicherer Regler geschaffen wird. Die Anzahl der benötigten Bauteile soll verringert werden und die Abmessung des Reglers insgesamt reduziert werden. Für die Fertigung sollen keine aufwendigen Werkzeuge und Bearbeitungsgänge erforderlich sein. Schließlich soll auch bei einem kleinen Proportionalbereich eine große Stabilität erreicht werden. Eine hohe Ansprechempfindlichkeit, ein geringer Eigenverbrauch sowie ein hoher Druckmitteldurchsatz sollen erreicht werden.

Zur Lösung wird vorgeschlagen, daß der Volumenverstärker und ein Vorverstärker in das Gehäuse integriert sind und insbesondere über einen Regelkörper, der insbesondere einem Kegel des Volumenverstärkers aufweist, sowie eine Längsbohrung miteinander in Verbindung stehen. Der erfindungsgemäße Regler ist aufgrund der Integration von Vorverstärker und Volumenverstärker sehr kompakt aufzubauen. Der Kegel und der Regelkörper können erfindungsgemäß eine axial durchgehende Innenbohrung aufweisen und in einem Ringspalt, der von Zuluft gedrosselt durchströmt wird, geführt sein. Wesentlich ist ferner, daß bei Ausbildung des Wandlers mit einer Spiral- bzw. Meßfeder diese lose, also ohne Hilfsmittel, auf die insbesondere einen Vierkant an ihrer Außenfläche aufweisende Welle aufgesteckt ist. Die Nullpunkt-Einstellung erfolgt außerhalb des Gehäuses, wobei im Rahmen der Erfindung die Welle und die auf dieser unmittelbar befestigte und insbesondere aufgesteckte Spiralfeder miteinander bezüglich eines Übertragungshebels oder dergleichen verstellt werden. Weitere Hilfsmittel oder das Öffnen des Gehäuses sind hierbei nicht erforderlich. Die einzelnen Bauteile können sehr klein gehalten werden, wodurch erhebliche Platz- und Gewichtsvorteile sich ergeben. Wesentlich ist, daß das Membranpaket des Vorverstärkers mit einem kleinen Durchmesser ausgebildet werden kann, und für einen kleinen Proportionalbereich eine große Stabilität erzielt wird. Aufgrund der kompakten Bauart und Integration ist es überraschend möglich, mit einfachen Dichtungen den Regler insgesamt für hohe Druckbereiche auslegen zu können. Der Regler kann problemlos bis 10 bar betrieben werden.

In einer wesentlichen Ausgestaltung weist die Welle einen Vierkant oder dergleichen auf, auf welchen die Meßfeder mit ihrem entsprechend geformten Ende bevorzugt lose aufgesteckt ist. Die Fertigung und Montage wird hierdurch wesentlich vereinfacht, da besondere Hilfsmittel zur drehfesten Verbindung entfallen. Wesentlich ist die formschlüssige und gleichwohl drehfeste Verbindung zwischen Meßfeder und Welle, wobei anstelle eines Vierkantes natürlich auch ein Dreikant oder ähnliche Formgebungen vorgesehen werden können. Die Meßfeder ist in entsprechender Weise ausgebildet und wird bei der Fertigung einfach auf die Welle aufgeschoben und es wird in einfacher Weise eine formschlüssige Verbindung ohne Hilfsmittel hergestellt. Die Nullpunkt-Einstellung erfolgt außerhalb des Gerätes durch Drehen der Welle samt Meßfeder mittels einer Schraube, mittels welcher die Drehwinkellage der Welle bezüglich eines Übertragungshebel oder dergleichen veränderbar ist. Bei dem erfindungsgemäßen Regler wird das Gehäuse mit einem Gehäusedeckel abgeschlossen, welcher die Meßfeder und das Prallplattensystem vor äußeren Einwirkungen schützt. Die oben genannte Einstellung erfolgt erfindungsgemäß außerhalb des Gehäuses bei festmontiertem Gehäusedeckel.

In einer besonderen Ausgestaltung weist das Gehäuse eine bevorzugt senkrecht zur Längsbohrung angeordnete und in diese mündende Querbohrung auf, über welche das Druckmittel dem Volumenverstärker zugeführt wird. Die genannten Bohrungen können mit geringem Fertigungsaufwand in das Gehäuse eingebracht werden und insgesamt wird ein geringer Platzbedarf insoweit benötigt. Die Längsbohrung verbindet die erfindungsgemäß übereinander angeordneten Vorverstärker und Volumenverstärker und die Querbohrung mündet somit zwischen diesen beiden in die Längsbohrung. Die Querbohrung ist im Rahmen dieser Erfindung als eine Sackbohrung ausgebildet, während die Längsbohrung als eine Durchgangsbohrung ausgebildet ist. Der Vorverstärker ist in einer Bohrung des Gehäuses angeordnet, welche Bohrung bevorzugt eine Ringschulter aufweist, um das Membranpaket mittels eines Abschlußdeckels oder dergleichen einzuspannen. Der Volumenverstärker befindet sich auf der anderen Seite des Gehäuses und ist ebenfalls in einer Bohrung desselben untergebracht. Die Längsbohrung, sowie die Bohrungen für den Vorverstärker sowie den Volumenverstärker fluchten im Rahmen dieser Erfindung miteinander, wodurch die Bearbeitung besonders einfach wird.

In einer besonders wesentlichen Ausführungsform des elektropneumatischen Stellungsreglers weist dessen Wandler ein Düsen-Prallplattensystem mit einem elektrostriktiven Element auf. Mit einem derart ausgebildeten elektropneumatischen Stellungsregler kann ein elektrisches Signal, und zwar vorzugsweise ein elektrischer Strom in der Größenordnung zwischen 4 und 20 mA, in einen pneumatischen Druck gewandelt werden. Ein am Ausgang des erfindungsgemäßen Reglers angeschlossener pneumatischer Antrieb kann proportional zum Eingangs- bzw. Führungssignal in eine definierte Stellung, sei es Hub- oder Drehwinkel, eingestellt werden. Die Prallplatte ist Bestandteil des bevorzugt piezoelektrischen oder piezooxiden Biegewandlers in bimorpher Ausführung. Der Biegewandler ist am einen Ende eingespannt und ragt mit seinem freien Ende, wie eine herkömmliche Prallplatte, über eine Düse. Wird eine Spannung an den Elektroden des Biegewandlers angelegt, so ändert sich die Lage des freien Endes über der Düse mit der Folge einer entsprechenden Änderung des Düsengegendruckes. Der Biegewandler ist das Ausgangsstellglied in dem elektronischen Regelkreis, in welchem der Ist-Wert (Hub- oder Drehwinkel) über einen entsprechenden Sensor abgegriffen und mit dem Eingangssignal verglichen wird. Die in einem elektronischen Lageregler verstärkte Regelabweichung wird, wobei erfindungsgemäß ein entsprechendes Zeitverhalten vorgehbar ist, einer Piezo-Regelstufe zugeführt, um den Biegewandler auszusteuern. Es sei ausdrücklich hervorgehoben, daß in diesem Regelkreis anstelle der oben erläuterten Vor- und Volumenverstärker auch andere Volumenverstärker bzw. Steuerventilanordnungen im Rahmen dieser Erfindung zum Einsatz gelangen können. Maßgebend ist, daß mit dem erfindungsgemäßen elektropneumatischen Stellungsregler entsprechend dem elektrischen Eingangssignal unter Einschaltung des Düsen-Prallplatten -Systems mit dem elektristriktiven Element und ggfs. über einen geeigneten Verstärker oder Steuerventilanordnungen eine entsprechende Stellung des angeschlossenen pneumatischen Antriebes vorgegeben wird.

Um die Rückwirkung des Düsen-Blasdruckes zu reduzieren, wird in einer besonders wesentlichen Weiterbildung der Biegewandler bezüglich der Düsenebene schräg angeordnet. Hierbei weist der Biegewandler bzw. die Prallplatte ein insbesondere als Prisma oder dergleichen ausgebildetes Teil auf, um eine winkelgerechte Zustellung von Prallplatte und Düse zu erhalten.

In einer weiteren, besonders wesentlichen Ausgestaltung wird die für die Elektronik benötigte Hilfsenergie dem Eingangssignal, insbesondere nach dem Prinzip des Zwei-Leiter-Anschlusses, entnommen. Die elektronische Regeleinrichtung ist aus Bauteilen aufgebaut, die sich durch eine geringe Leistungsaufnahme auszeichnen, wobei hier vor allem auf CMOS-Bauteile verwiesen sei. Ferner wird der Sensor zur Umwandlung der Stellung in ein elektrisches Signal, und zwar den Ist-Wert, für einen geringen Leistungsverbrauch hochohmig ausgebildet.

In einer besonders zweckmäßigen Ausgestaltung ist der Prallplattenhalter unmittelbar mit dem Vorverstärker, und zwar insbesondere mit einem Abschlußdeckel desselben verbunden. Besondere Leitungen usw. zur Verbindung zwischen Vorverstärker und Meßwerk entfallen, wodurch der Fertigungsaufwand und auch der Platzbedarf nicht unwesentlich reduziert werden können. Zweckmäßig ist der Prallplattenhalter mit dem Vorverstärker bzw. dessen Deckel mittels einer Hohlschraube befestigt und kann zwecks Invertierung wahlweise um 180° gedreht mit dem Vorverstärker verbunden werden, wobei zusätzliche Bauteile entbehrlich sind. Ferner ist die Düse erfindungsgemäß integraler Bestandteil des Prallplattenhalters, wobei durch entsprechende Oberflächenbehandlung, insbesondere Coating, die notwendige Standzeit gewährleistet wird.

In einer besonderen Ausgestaltung weist der Vorverstärker drei Kammern auf, die mittels zwei Membranen eines Membranpaketes getrennt sind, wobei zweckmäßig in die mittlere Kammer konstant Druckmittel zugeführt wird. Das Membranpaket kann äußerst klein gehalten werden, was günstig im Hinblick auf die Stabilität im Regelbereich sich erweist. Das Membranpaket wird im Rahmen dieser Erfindung mittels des Abschlußdeckels in der Bohrung des Gehäuses fest gespannt.

In einer weiteren Ausgestaltung ist auch die Membran des Meßwerkes mittels eines Abschlußdeckels in einer entsprechenden Bohrung des Gehäuses eingespannt. Der Membranteller liegt hierbei lose auf der Membran des Meßwerkes auf, und ist durch eine Bohrung des Abschlußdeckels nach außen geführt um dort mit dem äußeren Ende der Meßfeder verbunden zu sein. Schließlich ist auch der Volumenverstärker in entsprechender Weise in einer Bohrung des Gehäuses angeordnet und ebenfalls mit einem Bodendeckel abgeschlossen. Die besagten Deckel werden im Rahmen der Erfindung unlösbar, und zwar insbesondere durch Umbiegen eines aus der Gehäuseoberfläche vorstehenden Randes, befestigt. Der Arbeitsaufwand ist insoweit äußerst gering und bei minimalem Platzbedarf wird eine zuverlässige Befestigung der genannten Deckel gewährleistet.

In einer wichtigen Ausgestaltung weist der Kegel eine Überströmbohrung auf, durch welche Druckmittel bevorzugt durch die Innenbohrung zu einem Regelspalt im Vorverstärker zwecks Feinregelung gelangt. Die Ansprechempfindlichkeit wird durch diese Maßnahme entscheidend verbessert. Bereits bei sehr kleinen vom Meßwerk erfaßten Änderungen erfolgt über den Regelspalt eine Feinregulierung, wodurch in überraschend einfacher Weise eine erhebliche Vergrößerung der Ansprechempfindlichkeit bewirkt wird. Der Regelspalt ist zweckmäßig zwischen der Endfläche des Kegels und der Kappe in der unteren Kammer des Vorverstärkers angeordnet, wobei durch die Überströmbohrung das Druckmittel über den Regelspalt in die besagte Kammer des Vorverstärkers strömt. Im Rahmen der Erfindung weist die Überströmbohrung des Kegels nur einen vergleichsweise geringen Querschnitt auf, damit insoweit der Druckmittelverbrauch gering gehalten werden kann. Wesentlich ist ferner eine schwimmende Führung des Kegels in der Innenbohrung des Gehäuses. Hierzu ist zwischen dem im oberen Teil zylindrischen Außenfläche des Kegels und der Innenbohrung ein derart geringes Spiel vorhanden, daß einerseits ein Festsitzen vermieden wird und andererseits kein zu hoher Druckmitteldurchsatz von der Querbohrung zur besagten Kammer des Vorverstärkers erfolgt. Am anderen Ende des Kegels befindet sich der Regelspalt des Volumenverstärkers für die Grobregulierung. Von der Zuström- bzw. Querbohrung gelangt das Druckmittel über einen vergleichsweise breiten Ringspalt zu dem letztgenannten Regelspalt. Erfindungsgemäß enthält der Kegel einen zylindrischen Teil, der in der Innenbohrung des Gehäuses angeordnet ist und in welchem sich die durchgehende Länngsbohrung befindet. Die Außenfläche des zylindrischen Teiles ist bevorzugt gestuft ausgeführt, um einerseits die Führung in der Innenbohrung und andererseits auch einen hinreichend großen Ringspalt zu erhalten, durch welchen Druckmittel in den Volumenverstärker gelangt. Im Rahmen der Erfindung kann entsprechend auch die Außenfläche des zylindrischen Teils durchgehend den gleichen Durchmesser aufweisen, während die Innenbohrung entsprechend gestuft ausgebildet ist.

In einer alternativen Ausgestaltung ist der Regelkörper nicht in einer Längsbohrung in einem schmalen Ringspalt schwimmend gelagert, sondern es ist eine zusätzliche Kammer vorhanden, welche mit einer dritten, untersten Membran des Membranpakets und dem Gehäuse gebildet wird. In diese zusätzliche Kammer mündet auch die Ausgangsbohrung. Durch geeignete Bemessung der Membranflächen wird auch bei dieser Ausführungsform gewährleistet, daß bei Entlüftung, und zwar wie mit einer Feder, auf das Membranpaket bzw. dessen Kern eine nach oben gerichtete Kraft wirksam wird. Diese Ausführungsform erfordert einen geringen Fertigungsaufwand, da keine besonderen engen Toleranzen für die Längsbohrung im Gehäuse zwischen dem Volumen- und dem Vorverstärker erforderlich ist. Gleichwohl wird eine zuverlässige Halterung und Führung des Regelkörpers gewährleistet, was von besonderer Bedeutung beim Entlüften oder bei schlagartigen Änderung des Istwertes ist. Von besonderer Bedeutung sind seitliche Schlitze im Bereich der Längsbohrung im Hinblick auf die Spülströmung und den insoweit ungehinderten Durchlaß der Zuluft zur Ausgangsbohrung. Der Regelkörper weist im Volumenverstärker bevorzugt einen Konus bzw. Kegel auf und ist im Vorverstärker kugelförmig ausgebildet. Der Konus gewährleistet eine gute Selbstzentrierung, während die Kugel eine gute Luftleistung ergibt. Ferner ist die kugelförmige Ausgestaltung des Regelkörpers im Vorverstärker günstig im Hinblick auf einen evtl. Versatz, Fertigungsungenauigkeiten. Ferner ergeben sich hieraus Vorteile bei unterschiedlicher Beaufschlagung des Membranpaketes infolge von Toleranzen, und zwar insbesondere der Membranen. Diese Ausführungsform zeichnet sich durch eine hohe, verbesserte Ansprechempfindlichkeit aus. Ein seitliches Ausknicken des Regelkörpers, insbesondere beim Belüften, ist vor allem aufgrund der großen Auflagefläche der Feder auf dem Kegel vom Volumenverstärker nicht zu befürchten. Durch begrenzte Kegelführung an den seitlichen Schlitzen mittels seitlicher Anlageflächen ist es nicht möglich, daß der Kegel im entlüfteten Zustand bei Erschütterungen seitlich ausbrechen kann.

In einer besonderen Ausgestaltung wird die Führungsgröße als elektrisches Signal einem elektro-pneumatischen Wandler zugeführt, welcher direkt mit dem Gehäuse verbunden ist. Zur Verbindung sind zwei Säulen vorgesehen, die Längsbohrungen enthalten. Durch diese Längsbohrungen wird vom Gehäuse in den genannten Wandler die Zuluft geleitet und die pneumatische Führungsgröße dem Gehäuse sowie dem im Gehäuse angeordneten Meßwerk zugeführt. Es kann ein handelsüblicher elektro-pneumatischer Wandler, und zwar auch in explosionsgeschützter Ausführung, zum Einsatz gelangen, in dessen Bodenplatten die genannten Säulen fest verbunden sind. Für diese Ausführungsform sind in dem Gehäuse entsprechende Bohrungen vorzusehen, um die Zuluft in die eine Verbindungssäule zu führen und die pneumatische Führungsgröße dem in das Gehäuse integrierten Meßwerk zuzuführen. Der Fertigungsaufwand ist insoweit gering und der erfindungsgemäße Regler kann bei kompakter Bauweise und im übrigen praktisch unverändert gegenüber den oben erläuterten Ausführungsformen mit einer elektrischen Führungsgröße angesteuert werden. Die eingangs erläuterten Funktionsweisen gelangen bei kompakter Bauweise und minimalem Aufwand zur Anwendung.

Die Erfindung wird nachfolgend anhand der in der Zeichnung dargestellten Ausführungsbeispielen erläutert. Es zeigen:

Fig. 1    schematisch eine Ansicht eines Stellungsreglers,

Fig. 2    eine Aufsicht in Blickrichtung I gemäß Fig. 1,

Fig. 3    vergrößert einen Schnitt durch den integrierten Volumen- und Vorverstärker,

Fig. 4    einen Regler entsprechend Fig. 1, jedoch mit gedreht montiertem Prallplattenhalter zwecks Invertierung,

Fig. 5    eine Ausführungsform des Reglers ähnlich Fig. 3, wobei das Membranpaket drei Membrane aufweist,

Fig. 6    eine Ausführungsform entsprechend Fig. 5 und zwar als doppelt wirkender Regler, bei welchem am oberen Ende des Membranpaketes ein zweiter Regelkörper angeordnet ist,

Fig. 7    ein Prinzipschaltbild des elektropneumatischen Stellungsreglers mit elektrostriktivem Element,

Fig. 8    schematisch eine Ausführungsform, bei welcher das Prallplatten-System gemäß Fig. 7 bezüglich der Düse unter einem Winkel geneigt angeordnet ist,

Fig. 9    eine Aufsicht ähnlich Fig. 2 mit einem integrierten elektro-pneumatischen Wandler,

Fig. 10    schematisch eine Ansicht in Blickrichtung X gemäß Fig. 9,

Fig. 11    eine Aufsicht auf das Gehäuse von Fig. 9.

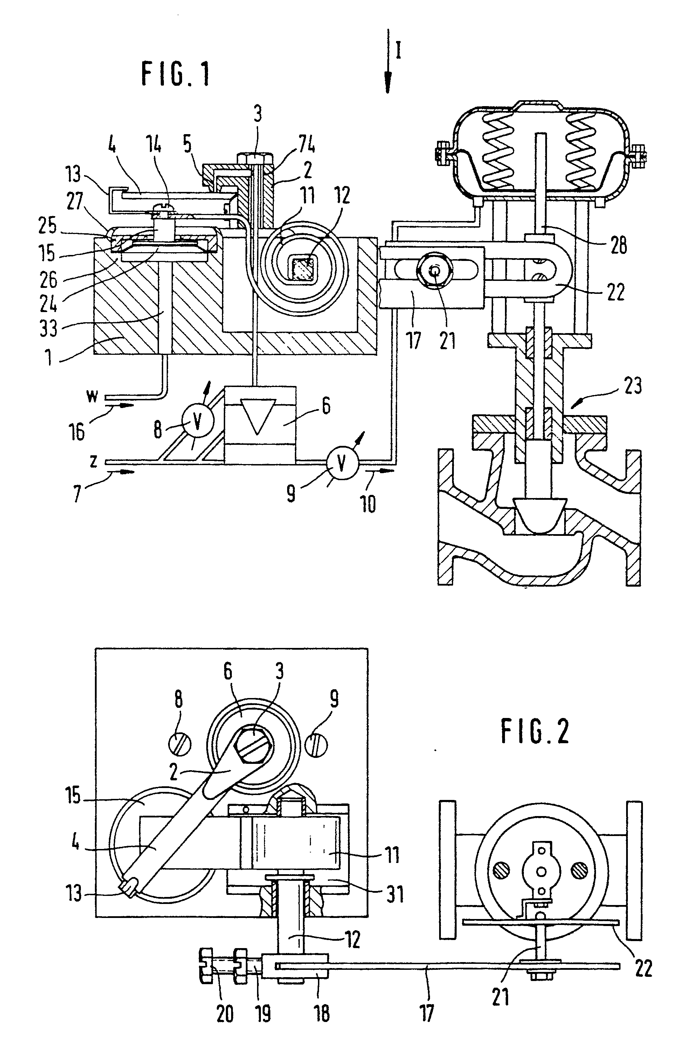

Fig. 1 zeigt schematisch das Gehäuse 1 des Reglers, auf welchem oben ein Prallplattenhalter 2 mittels einer Hohlschraube 3 befestigt ist. Der Halter 2 enthält eine Prallplatte 4 sowie eine Düse 5, die auf den hier schematisch nur angedeuteten Verstärker 6 wirkt, der einen Vorverstärker und Volumenverstärker enthält. Entsprechend dem Pfeil 7 wird das Druckmittel, und zwar hier die Zuluft zugeführt, wobei zum Verstärker eine Vordrossel 8 mit Proportional-Bereich geschaltet ist. Dem Volumenverstärker ist eine einstellbare Volumendrossel 9 nachgeschaltet und gemäß Pfeil 10 wirkt die Stellgröße in bekannter Weise auf ein Regelventil 23. Vorverstärker und Volumenverstärker sind hier nur der Übersichtlichkeit wegen außerhalb des Gehäuses 1 dargestellt und befinden sich tatsächlich im Gehäuse 1, und zwar hinter der Zeichenebene.

In Verbindung mit Fig. 2 ist vom Wandler bzw. Meßwerk eine Meßfeder 11 gut zu erkennen, deren inneres Ende auf die Welle 12 gesteckt ist. Die Welle 12 weist hierzu einen Vierkant auf und erfindungsgemäß ist die Meßfeder 11 einfach auf den genannten Vierkant aufgesteckt. Zusätzliche Halterungen oder dergleichen sind nicht notwendig, wobei zur Montage auch keine zusätzlichen Hilfsmittel benötigt werden. Die Meßfeder 11 ist in einer kleinen Ausnehmung 31 des Gehäuses 1 angeordnet und auch für die erfindungsgemäß Kurze Welle 12 ist nur ein geringer Platzbedarf im Gehäuse 1 erforderlich. Das andere Ende der Meßfeder 11 ist zusammen mit einem Bügel 13 mittels einer Schraube 14 mit dem Membranteller 15 des Meßorganes für die Führungsgröße verbunden. Der Membranteller 15 liegt im Rahmen der Erfindung lose auf der Membran 24 auf und eine besondere Befestigung entfällt insoweit. Zur Montage muß lediglich die Membran 25 auf die Ringschulter 26 aufgelegt werden und nachfolgend der Membranteller 15 sowie der Deckel 25 in die im Gehäuse vorgesehene Bohrung eingesetzt werden. Entsprechend dem Pfeil 16 wird die Führungsgröße w durch die Bohrung 33 zugeführt und über die Membran den Membranteller, und den Bügel 13 wirkt eine Kraft auf die Prallplatte 4. Die Membran 24 ist mittels eines Deckels 25 auf einer Ringschulter 26 des Gehäuses 1 am Rand eingespannt. Der Deckel 25 ist durch Umdrücken eines über die Oberkante des Gehäuses 1 vorstehenden Randes 27 fest in das Gehäuse eingespannt, wobei mittels des Randes der Membran 24 auch gleichzeitig die Abdichtung sichergestellt wird.

Zur Übertragung der Stellung der Spindel 28 und somit des Ventilkegels des Ventiles 23 dient ein Übertragungshebel 17, der mittels eines Klemmstückes 18 und einer Befestigungsschraube 19 mit der Welle 12 drehfest verbunden ist. Zur Feinjustage ist ferner eine Nullpunkt-Schraube 20 vorgesehen. Mit der Ventilstange 28 ist ein Mitnehmer 22 verbunden, wobei über einen Mitnehmerstift 21 die Hubeinstellung erfolgen kann. Die Nullpunkt-Einstellung erfolgt somit außerhalb des Gerätes durch Drehen der Welle 12 mitsamt der Meßfeder 11. Das Gehäuse bzw. ein das Gehäuse 1 oben abschließender Deckel, der hier der Einfachheit halber nicht dargestellt ist, brauchen hierzu nicht geöffnet zu werden.

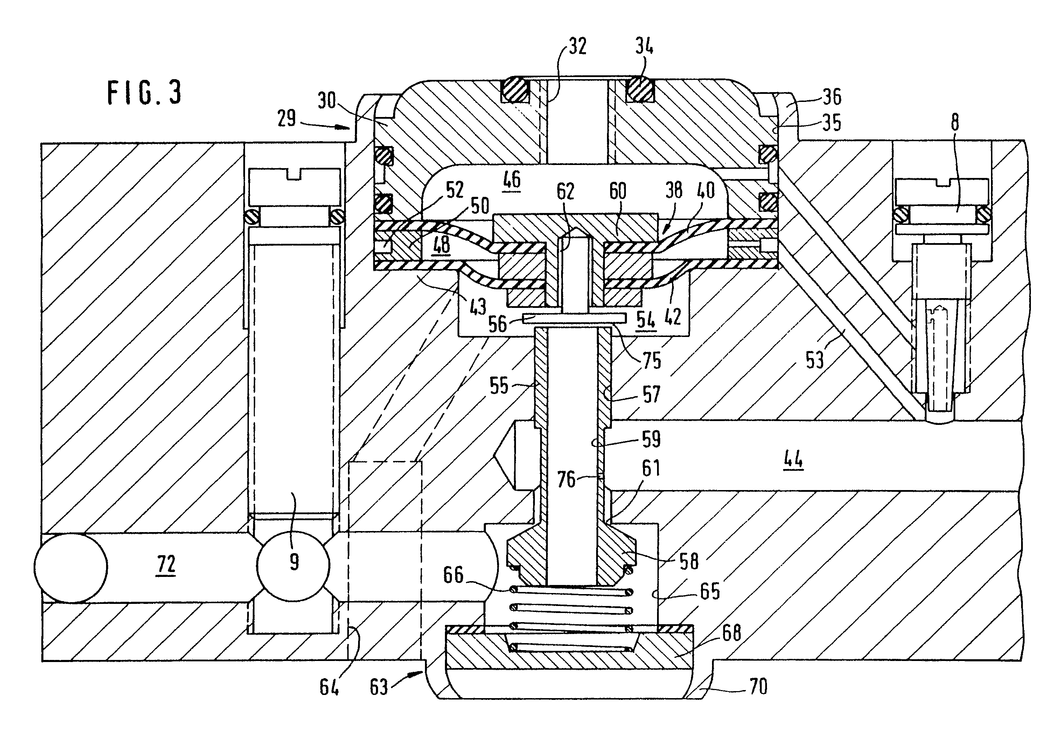

Fig. 3 zeigt vergrößert den integrierten Vorverstärker 29 mit Volumenverstärker 63. Vom Vorverstärker ist oben der Abschlußdeckel 30 zu erkennen, der ein Innengewinde 32 aufweist, in welches die oben erwähnte Hohlschraube zur Befestigung des Prallplattenhalters eingeschraubt wird (hier nicht dargestellt). Damit ist auf kürzestem Wege und mit minimalem Material- und Bauteileinsatz die Verbindung zwischen der Düse des Prallplattenhalters und dem Vorverstärker geschaffen. Zur Abdichtung zum Prallplattenhalter dient ein O-Ring 34. Das Gehäuse 1 weist einen oberen Rand 36 auf, der mittels eines Druckwerkzeuges in der dargestellten Weise umgebogen oder eingewalzt ist und somit eine zuverlässige Befestigung des Abschlußdeckels 30 sowie der weiteren Bauteile des Vorverstärkers gewährleistet. Im Inneren der Bohrung 35 des Vorverstärkers 29 befindet sich ein Membranpaket 38 mit zwei Membranen 40, 42. Das Membranpaket 38 liegt auf einer Ringschulter 43 der Bohrung 35 auf und ist dort über den Abschlußdeckel 30 eingespannt.

Das Gehäuse 1 enthält ferner eine Querbohrung 44, durch welche das Druckmittel bzw. die Zuluft zugeführt wird. Die Querbohrung 44 mündet in eine Längsbohrung 57, welche die beiden übereinander angeordneten Bohrungen 35 und 65 den Vorverstärker 29 und Volumenverstärker 63 verbindet. In der Längsbohrung 57 befindet sich der Regelkörper 55 mit dem Kegel 58 des Volumenverstärkers sowie mit einer durchgehenden Innenbohrung 59, über welche die Verbindung zum Vorverstärker herstellbar ist. Über die einstellbare Vordrossel 8, die einen konstanten und einstellbaren Xp-Bereich ergibt, gelangt die Zuluft in die obere Kammer 46 des Vorverstärkers. In die mittlere Kammer 48 wird erfindungsgemäß konstant Zuluft zugeführt; eine Feder wird hierdurch entbehrlich. Die konstante Zuluft gelangt durch eine Bohrung 53 und einen Zwischenring 50 in die mittlere Kammer 48, wobei der Ring 50 außen eine Ringnut 52 aufweist, so daß bei der Montage keine exakte Ausrichtung notwendig wird. In der unteren Kammer 54 befindet sich eine Kappe 56, die mit dem Kegel 58 des Volumenverstärkers zusammenwirkt. Wesentlich ist hierbei die Anordnung der Kappe 56 im Kern 60 derart, daß die Kappe 56 lose in einer Sackbohrung 62 des Kernes 60 bewegbar ist. Damit wird in überraschend einfacher Weise sichergestellt, daß bei einem Schrägstehen des Kernes 60 keine zu starke Entlüftung der unteren Kammer 54 über eine Entlüftungsbohrung 64 stattfindet; der Druckmittelverbrauch kann somit gering gehalten werden.

Der Volumenverstärker 63 enthält in der Bohrung 65 im wesentlichen den Kegel 58, der mittels einer Feder 66 auf einem Bodendeckel 68 abgestützt ist. Auch der Bodendeckel 68 ist mittels eines nach innen umgebogenen Randes 70 zuverlässig im Gehäuse 1 befestigt. Über die Ausgangsbohrung 72 zum Druckraum des Ventils wird die entsprechend der Stellung des Kegels 58 vorgegebene Stellgröße nach außen geleitet. Die Einstellung des Volumens erfolgt mittels der einstellbaren Volumendrossel 9, die ebenfalls in dem Gehäuse 1 angeordnet ist. Der Kegel 58 ist im oberen Teil der Längsbohrung 57 in einem leichten Luftstrom geführt. Zwischen dem Kegel und der Längsbohrung 57 befindet sich hierzu ein geringer Ringspalt, durch welchen im Rahmen der Erfindung ein geringer Anteil von der Zuluft zwecks leichtgängiger Führung des Kegels 58 abströmt. Im unteren Teil kann die Zuluft außen vorbeiströmen, um im Regelspalt 61 entsprechend eingestellt zu werden. Die Verbindung zum Vorverstärker 29 erfolgt über die Innenbohrung 59 des Kegels 58 und Regelspalt 75. Der Kegel 58 weist erfindungsgemäß eine Überströmbohrung 76 auf, die zur Feinregelung an einem Regelspalt 75 dient. Dieser Regelspalt 75 befindet sich im Rahmen der Erfindung zwischen dem oberen Ende des Kegels 58 und der Kappe 56. Die Ansprechempfindlichkeit wird hierdurch nicht unwesentlich vergrößert.

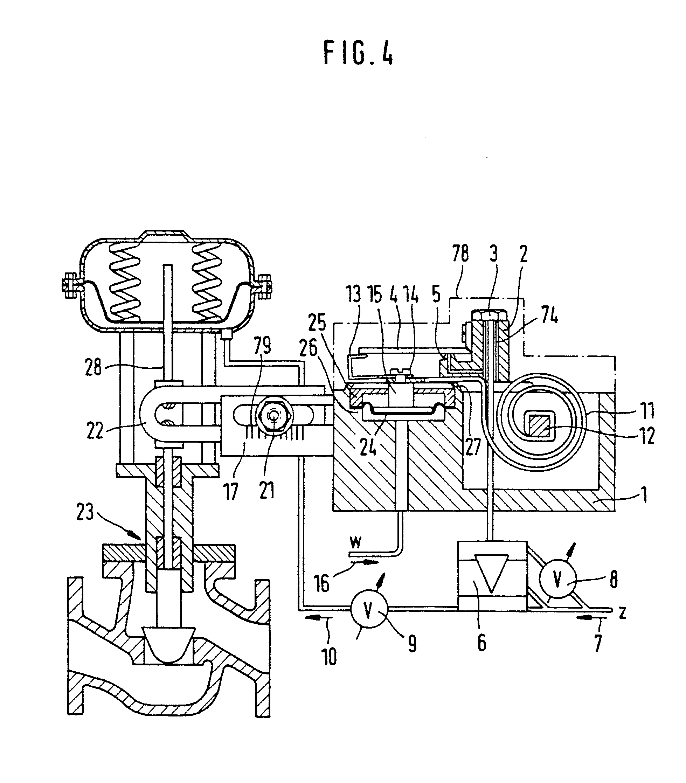

Fig. 4 zeigt seitenverkehrt den Regler entsprechend Fig. 1, wobei jedoch der Prallplattenhalter 2 derart montiert ist, daß die Düse 5 sich unter der Prallplatte 4 befindet. Der Bügel 13 liegt unter dem freien Ende der Prallplatte 4. Hiermit ist in einfacher Weise die Invertierung vorgenommen. Es muß hierzu lediglich die Hohlschraube 3 gelöst werden und der Prallplattenhalter entsprechend um 180° verdreht und mittels der Hohlschraube 3 wieder auf den Abschlußdeckel des Vorverstärkers befestigt werden. Der anhand von Fig. 3 erläuterte obere Rand 36 ist hier von der Seite zu sehen, wobei hier aus Gründen der Übersichtlichkeit der integrierte Volumen- und Vorverstärker 6 außerhalb des Gehäuses 1 dargestellt ist. Der Prallplattenhalter 2 weist eine Durchgangsbohrung 74 auf, durch welche die Hohlschraube 3 durchgeführt ist. Die Hohlschraube ist, wie oben bereits erläutert, in das Innengewinde des oberen Abschlußdeckels eingeschraubt. Die Hohlschraube 3 weist im Rahmen dieser Erfindung seitliche Durchbrechungen auf, durch welche das Druckmittel vom Vorverstärker zu der Düse 5 abströmen kann. Wie durch strichpunktierte Linien angedeutet, ist das Gehäuse oben mit einem Gehäusedeckel 78 abgeschlossen. Die Meßfeder 11 der Prallplattenhalter 2 usw. werden mittels des Gehäusedeckels 78 vor äußeren Einwirkungen geschützt; der Gehäusedeckel 78 ist in geeigneter Weise, zweckmäßig mittels Schrauben, mit dem Gehäuse 1 fest verbunden. Die oben bereits erläuterte Nullpunkt-Einstellung erfolgt außerhalb des Gehäuses, ohne daß hierzu der Gehäusedeckel 78 abgenommen werden muß. Die Membran 24 ist bei dieser besonderen Ausführungsform als eine Sickenmembran ausgebildet. Hierdurch wird die Streuung der Kräfte klein gehalten, was vor allem im Hinblick auf das Umsetzen der Prallplattehalterung zwecks Invertierung von besonderer Bedeutung ist. Ferner sind gemäß einer wesentlichen Ausgestaltung auf dem Übertragungshebel Markierungen 79 in Form von Strichen oder ähnlichem vorgesehen. Der Montageaufwand kann durch eine solche Einstellhilfe zwischen dem Regelventil 23 und dem Wandler reduziert werden.

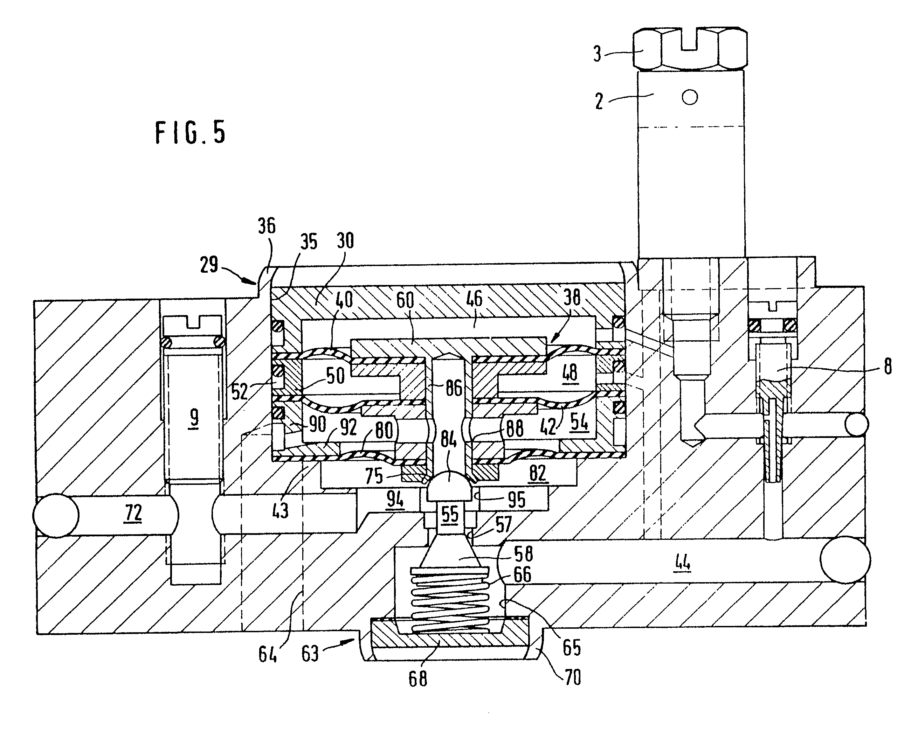

Fig. 5 zeigt eine Ausführungsform, und zwar ähnlich Fig. 3, wobei jedoch das Membranpaket 38 eine dritte, unterste Membran 80 aufweist, mittels welcher eine zusätzliche Kammer 82 gebildet wird. Der Regelkörper 55 enthält den Kegel 58 des Volumenverstärkers und oben einen kugelähnlich ausgebildeten Teil 84, der mit dem unteren Ende des dort hülsenförmigen Kernes 60 den Regelspalt 75 des Vorverstärkers bildet. Bei dieser Ausführungsform ist also der Regelkörper 55 nicht von einem engen Ringspalt umgeben. Bezüglich der Längsbohrung 57 im Gehäuse 1 sind keine besonderen engen Toleranzen einzuhalten sind. Durch die erfindungsgemäße Ausgestaltung des Regelkörpers 55 mit einem kugelförmigen Teil 84 einerseits und einem Kegel 58 wird eine stabile Führung des Regelkörpers 55 gewährleistet, wobei vor allem im Hinblick auf die große Auflagefläche der Feder 66 ein seitliches Ausknicken beim Belüften vermieden wird. Eine zuverlässige Halterung beim Entlüften sowie bei schlagartigen Änderungen der Ist-Größe des an die Ausgangsbohrung 72 angeschlossenen Stell- oder Regelventils 23 ist mit geringem Aufwand sichergestellt. Die Längsbohrung 57 entspricht ferner in der Funktion der bei der Ausführungsform gemäß Fig. 3 erläuterten Innenbohrung des Regelkörpers, durch welche Innenbohrung die Verbindung vom Volumenverstärker 63 zum Vorverstärker 29 erfolgt. Entsprechend der Stellung des Membranpaketes kann durch den Regelspalt 75, durch das Innere der Hülse 86 sowie die radialen Bohrungen 88 ein gewisser Teil der Zuluft in die Kammer 54 gelangen und von dort über die um 45° versetzt gezeichnete Entlüftungsbohrung 64 abströmen.

Die dritte, unterste Membran 80 dient erfindungsgemäß zur Gleichgewichtshaltung des Membranpaketes zwischen Belüftung und Entlüftung. Die Membranen 40 und 42 sind in der Weise ausgebildet und angeordnet, daß beim Entlüften eine nach oben gerichtete Kraft wirksam werden kann. Wie ersichtlich, weist die Membran 40 eine größere wirksame Fläche auf als die zweite Membran 42. Wesentlich ist insoweit auch die Ausbildung des in der Bohrung 35 angeordneten untersten Ringes 90 mit einem radial nach innen gerichteten Ansatz 92. Mittels seitlicher Schlitze 94 in der Längsbohrung 57 wird eine gute Spülströmung erreicht. In geöffneter Stellung des Regelkörpers 55 wird ein praktisch ungehinderter Durchtritt der Zuluft aus der Querbohrung 44 in die Ausgangsbohrung 72 durch diese erfindungsgemäßen Schlitze 94 gewährleistet. Beim Entlüften dienen erfindungsgemäß die seitlichen Anlageflächen 95 zur Sicherung des Kegels 84 bei eventuellen Erschütterungen. Von maßgebender Bedeutung ist weiterhin die Anordnung des Membranpaketes 38 in der Weise, daß es in der Gleichgewichtsstellung einen vorgegebenen Betrag nach unten bzw. in Richtung zum Volumenverstärker 63 versetzt liegt. Mit anderen Worten, die Einspannebenen der Mebranen im Kern 60 befinden sich in der Gleichgewichtsstellung um einen vorgegebenen Betrag unterhalb der jeweiligen äußeren Einspannebenen. In überraschend einfacher Weise wird die Ansprechempfindlichkeit verbessert und aufgrund des geringeren Walkens der Membranen wird eine nicht unwesentlich verbesserte Linearität erzielt. Ein derartiger Versatz ist entsprechend auch bei den eingangs erläuterten Ausführungsformen vorhanden.

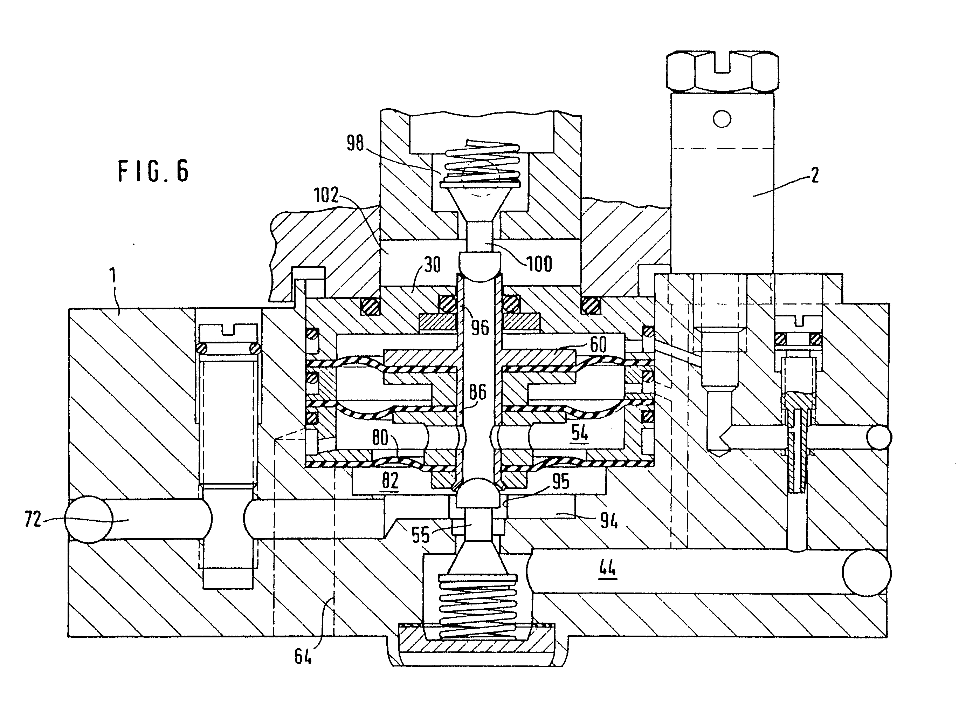

Fig. 6 zeigt eine Ausführungsform, die im wesentlichen der von Fig. 5 entspricht. Zusätzlich enthält der obere Deckel 30 eine Bohrung, durch welche abgedichtet eine obere Hülse 96 vom Kern 60 geführt ist. Mit dieser Ausführungsform ist ein doppelt wirkender Regler geschaffen. Hierzu wird die Zuluft über die Bohrung 44 und ferner die obere Bohrung 98 zugeführt. Entsprechend der Stellung des zweiten Regelkörpers 100 kann die Zuluft in den Raum 102 und von diesem über hier nicht weiter dargestellte Ausgangsbohrungen zu einem zweiten Membranraum des dort angeschlossenen Regel- oder Steuerventils gelangen.

In den oben erläuterten Ausführungsformen enthielt der Wandler ein Düsen-Prallplatten-System, welchem eine pneumatische Führungsgröße und über die Meßfeder der Ist-Wert zugeführt wurde. In einer weiteren Ausgestaltung kann statt dessen das Düsen-Prallplatten-System ein elektrostriktives Element enthalten, und zwar bevorzugt einen piezoelektrischen oder piezooxiden Biegewandler in bimorpher Ausführung.

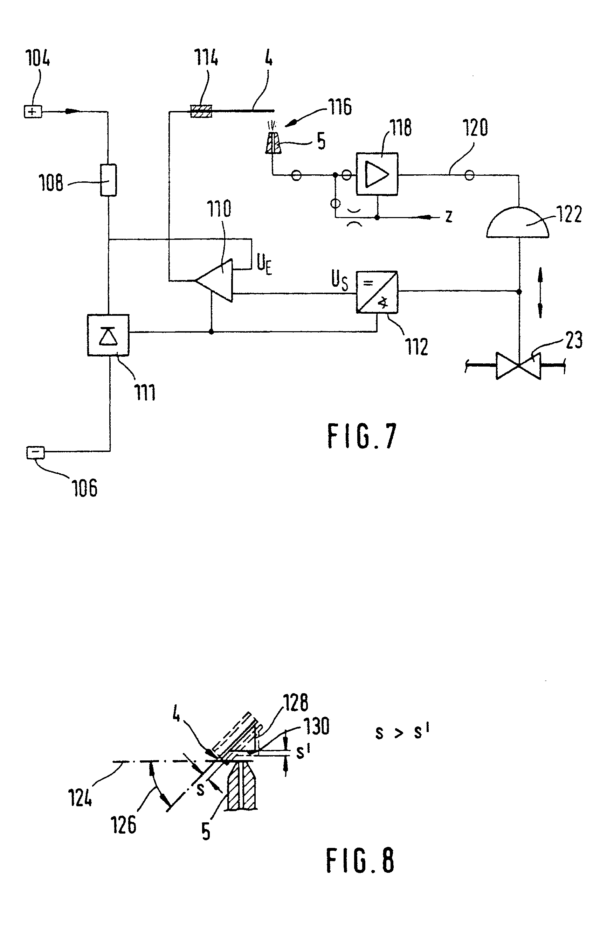

Fig. 7 zeigt schematisch das Wirkschema eines erfindungsgemäßen elektropneumatischen Stellungsreglers, dem die Führungsgröße 16 in Form eines elektrischen Stromes in der Größenordnung zwischen 4 und 20 mA an den Anschlüssen 104, 106 zugeführt wird. Die Führungsgröße 16 bzw. der Eingangsstrom gelangt über einen ersten Widerstand 108 und eine proportionale Spannung wird als Eingangssignal einem Differenzverstärker 110 zugeführt. Ferner ist eine elektronische Versorgungsschaltung 112, die als Schaltnetzteil ausgebildet ist, vorgesehen. Die Hilfsenergie bzw. die Versorgungsspannung für den Differenzstärker 110 und einen Sensor 112 wird erfindungsgemäß aus der Führungsgröße bzw. dem genannten Eingangsstrom abgeleitet. Wesentlich ist insoweit, daß die Bauteile der elektronischen Regeleinrichtung nur eine geringe Leistungsaufnahme aufweisen und insbesondere als CMOS-Bauteile ausgebildet sind. Der Sensor 112, mit welchem aus einem Stellungssignal, welches den Ist-Wert darstellt, ein entsprechendes elektrisches Signal gebildet wird, ist hochohmig ausgebildet, damit nur ein geringer Energieverbrauch gegeben ist. Das Ausgangssignal des Differenzverstärkers 110 wird dem piezoelektrischen Biegewandler 114 des Düse-Prallplatten-Systems 116 zugeführt. Entsprechend der an den Elektroden des Biegewandlers 114 anliegenden Spannung, und zwar nach Größe und Vorzeichen, wird die Prallplatte 4 nach oben oder unten ausgelenkt. Entsprechend der Lage des frei auskragenden Endes der Prallplatte erfolgt eine Umwandlung in einen entsprechenden Düsengegendruck der gegenüberstehenden Düse 5. Entsprechend dem Düsengegendruck wird über den pneumatischen Leistungsverstärker 118, der dem oben erläuterten Volumenverstärker entsprechen kann, über eine Ausgangsleitung 120 die Stellgröße 10 dem Membranraum 122 des Regelventils 23 zugeführt. Es darf festgehalten werden, daß anstelle des Regelventiles der elektropneumatische Stellungsregler im Rahmen dieser Erfindung auch ein anderes pneumatisches Stellglied aufweisen kann. Die Stellung, und zwar Hub oder Drehwinkel, des Regelventils oder Stellgliedes wird in dem Sensor 112 in ein elektrisches Signal gewandelt und als Ist-Wert dem Differenzverstärker 110 zugeführt. Der Biegewandler weist sehr kleine Abmessungen auf, und zwar in der Größenordnung von beispielsweise 7,3 mm x25 mm x0,4 mm. Im Vergleich zu dem eingangs erläuterten Meßwerk oder sonstigen Wandlern mit rein elektromechanischen Kraft-oder Drehmoment vergleichenden Systemen weist der erfindungsgemäße Wandler ein extrem kleines Volumen und eine praktisch vernachlässigbare Masse auf.

Fig. 8 zeigt schematisch eine besondere Ausführungsform des Biegewandlers, um evtl. nachteilige Rückwirkungen des Blasdruckes der Düse zu reduzieren. Mit dem piezoelektrischen Biegewandler werden nur relativ kleine Kräfte aufgebracht und ein demgegenüber nicht zu vernachlässigender Blasdruck kann einen systematischen Fehler bewirken. Erfindungsgemäß wird daher die Prallplatte 4 bezüglich der Düsenebene 124 unter einem Winkel 126 geneigt angeordnet. An der der Düse 5 zugewandten Seite der Prallplatte 4 befindet sich ein keilförmiger Körper 128, dessen Unterseite 130 parallel zur Düsenebene 124 liegt. Die senkrecht auf die Prallplatte wirkende Kraftkomponente ist kleiner als der Blasdruck. Folglich ist eine Auslenkung s der Prallplatte 4 größer als die Auslenkung s' der Unterseite 130 bezüglich der Düse 5. Durch den Körper 123 wird eine winkelgerechte Zustellung von Prallplatte und Düse gewährleistet und insgesamt wird durch die erfindungsgemäße Anordnung eine wesentlich reduzierte Blaskraftrückwirkung auf den Biegewandler erreicht.

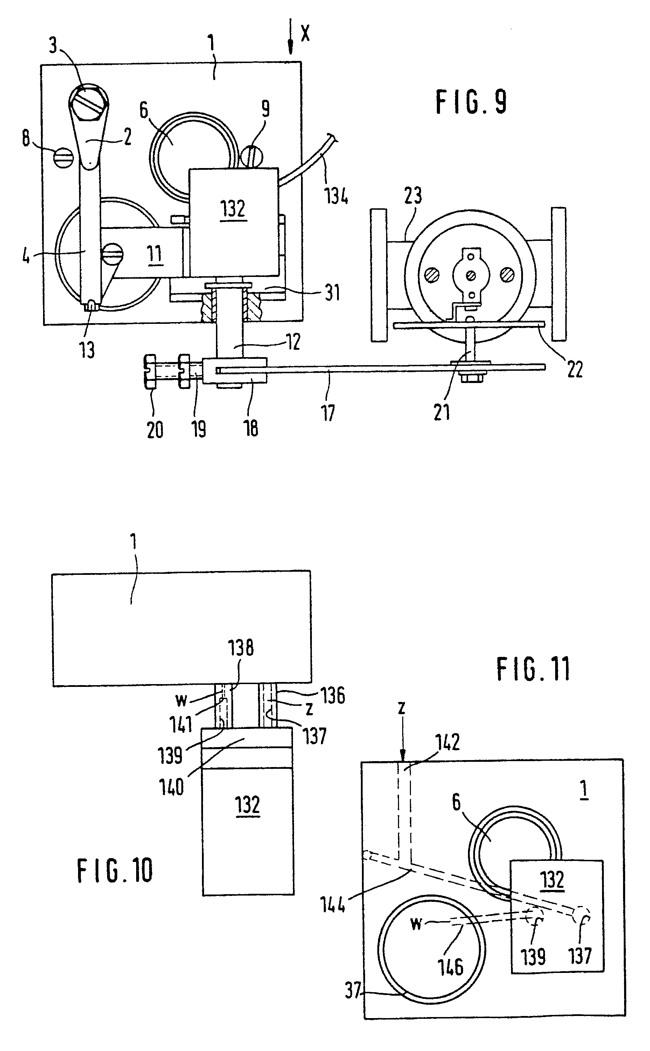

Fig. 9 zeigt eine Aufsicht ähnlich Fig. 2 mit einem elektropneumatischen Wandler 132, dem über die elektrischen Leitungen 134 eine elektrische Führungsgröße w in Form eines elektrischen Stromes zugeführt wird. Es kann im Rahmen dieser Erfindung ein konventioneller Wandler zum Einsatz gelangen, dem die Führungsgröße als Ströme zwischen 0 und 20 mA bzw. 4 und 20 mA zugeführt wird. Der Prallplattenhalter 2 ist entsprechend der Ausführungsform von Fig. 5 nicht auf dem Verstärker 6 sondern erfindungsgemäß seitlichen desselben angeordnet, so daß mit ein und demselben Gehäuse 1 ggfs. auch der doppelt wirkende Regler gemäß Fig. 6 realisiert werden kann. Im übrigen entspricht der in Fig. 9 dargestellte Regler den eingangs erläuterten Ausführungsformen, auf welche hier ausdrücklich Bezug genommen wird.

Fig. 10 zeigt schematisch eine seitliche Ansicht in Blickrichtung X von Fig. 9, wobei der Einfachheit halber das Düsen-Prallplatten-System und die Feder 11 und die Hebel zum Regelventil 23 nicht dargestellt sind. Mittels zweier Säulen 136, 138 ist der i/p-Wandler 132 mit dem Gehäuse mechanisch fest verbunden. Die Säule 136 enthält eine innere Längsbohrung 137, durch welche die Zuluft z vom Gehäuse 1 dem Wandler 132 zugeführt wird. In dem Wandler 132 wird das an den Leitungen 134 anstehende elektrische Signal in hier nicht weiter zu erläuternder Weise in ein pneumatisches Signal umgewandelt. Diese pneumatische Führungsgröße w gelangt durch die Längsbohrung 139 zum Gehäuse 1. In der Säule 138 befindet sich ferner eine Drosselstelle 141 für die pneumatische Führungsgröße w. Die Säulen 136, 138 sind mit der Bodenplatte 140 ebenso wie mit dem Gehäuse 1 mechanisch fest und ferner auch druckdicht verbunden. Erfindungsgemäß dienen die beiden Säulen 136, 138 sowohl zur mechanischen Befestigung des Wandlers 132 als auch zur Leitung der Zuluft sowie der Führungsgröße.

Fig. 11 zeigt schematisch eine Aufsicht auf das Gehäuse, wobei hier der Einfachheit halber vom Meßwerk nur der Rand 37 angedeutet ist. Das Gehäuse enthält eine Bohrung 142 sowie eine Querbohrung 144, welche unter dem Verstärker 6 durchgeführt ist und mit der Längsbohrung 137 der einen Säule in Verbindung steht. Die Zuluft wird in hier nicht weiter zu erläuternden Weise von der Bohrung 142 auch dem Verstärker 6 in dem Gehäuse 1 in hier nicht dargestellter Weise zugeführt. Das Gehäuse enthält ferner einen Verbindungskanal 146, über welchen die Längsbohrung 139 mit der unteren Kammer des Meßwerkes in Verbindung steht. Die pneumatische Führungsgröße w wird also nicht wie bei der Ausführungsform gemäß Fig. 1 von unten durch die Bohrung 33 sondern durch den Verbindungskanal 146 dem Meßwerk zugeführt.

Bezugszeichenliste

| | |
|---|---|
| 1 | Gehäuse |
| 2 | Prallplattenhalter |
| 3 | Hohlschraube |
| 4 | Prallplatte |
| 5 | Düse |
| 6 | Vorverstärker mit Volumenverstärker |
| 7 | Zuluft |
| 8 | Vordrossel mit Xp-Bereich |
| 9 | Volumendrossel |
| 10 | Stellgröße |
| 11 | Meßfeder |
| 12 | Welle |
| 13 | Bügel zur Betätigung der Prallplatte |
| 14 | Schraube |
| 15 | Membranteller |
| 16 | Führungsgröße |
| 17 | Übertragungshebel |
| 18 | Klemmstück |
| 19 | Befestigungsschraube |
| 20 | Nullpunkt-Schraube |
| 21 | Mitnehmerstift |
| 22 | Mitnehmer |
| 23 | Regelventil |
| 24 | Membran |
| 25 | Deckel |
| 26 | Ringschulter |
| 27 | Rand |
| 28 | Spindel |
| 29 | Vorverstärker |
| 30 | Abschlußdeckel |
| 31 | Ausnehmung |
| 32 | Innengewinde |
| 33 | Bohrung |
| 34 | O-Ring |

| | |
|---|---|
| 35 | Bohrung des Vorverstärkers |
| 36 | oberer Rand |
| 38 | Membranpaket |
| 40, 42 | Membran |
| 43 | Ringschulter |
| 44 | Querbohrung für Zuluft |
| 46 | obere Kammer |
| 48 | mittlere Kammer |
| 50 | Ring |
| 52 | Ringnut |
| 53 | Bohrung für Zuluft für 48 |
| 54 | untere Kammer |
| 55 | Regelkörper |
| 56 | Kappe |
| 57 | Längsbohrung |
| 58 | Kegel des Volumenverstärkers |
| 59 | Innenbohrung von 58 |
| 60 | Kern |
| 61 | Regelspalt |
| 62 | Sackbohrung |
| 63 | Volumenverstärker |
| 64 | Entlüftungsbohrung |
| 65 | Bohrung des Volumenverstärkers |
| 66 | Feder |
| 68 | Boden |
| 70 | Rand |
| 72 | Ausgangsbohrung |
| 74 | Durchgangsbohrung in 2 |
| 75 | Regelspalt zur Feinregulierung |
| 76 | Überstrombohrung für 75 |
| 78 | Gehäusedeckel |
| 79 | Markierung |
| 80 | dritte, unterste Membran |
| 82 | zusätzliche Kammer |
| 84 | kugelförmiger Teil |
| 86 | Hülse vom Kern 60 |
| 88 | radiale Bohrung |
| 90 | unterster Ring |
| 92 | radialer Ansatz |
| 94 | seitlicher Schlitz |
| 95 | seitliche Anlagefläche |
| 96 | obere Hülse |
| 98 | obere Bohrung |
| 100 | zweiter Regelkörper |
| 102 | Raum |
| 104,106 | Anschluß |
| 108 | erster Widerstand |
| 110 | Differenzverstärker |
| 112 | Sensor |
| 114 | Biegewandler |
| 116 | Düse-Prallplatte-System |
| 118 | Leistungsverstärker |
| 120 | Ausgangsleitung |
| 122 | Membranraum |
| 124 | Düsenebene |
| 126 | Winkel |
| 128 | Körper |
| 130 | Unterseite |

| 132 | i/p-Wandler |
| 134 | elektrische Leitung |
| 136,138 | Säule |
| 137,139 | Längsbohrung |
| 140 | Boden |
| 141 | Düse |
| 142 | Bohrung |
| 144 | Querbohrung |
| 146 | Verbindungskanal |

## Patentansprüche

1. Pneumatischer Regler, insbesondere elektropneumatischer Stellungsregler, mit einem Gehäuse (1), mit einem Wandler (11,24), welchem eine Führungsgröße (16) und ein Ist-Wert zuführbar sind, und mit einem von Druckmittel beaufschlagten Volumenverstärker (63), welcher von dem Wandler angesteuert wird, dadurch gekennzeichnet, daß ein Vorverstärker (29) und der Volumenverstärker (63) in das Gehäuse (1) integriert sind und über einen Regelkörper (55), der einen Kegel (58) des Volumenverstärkers (63) aufweist, sowie eine Längsbohrung (57) des Gehäuses (1) miteinander in Verbindung stehen.

2. Regler nach Anspruch 1, dadurch gekennzeichnet, daß der Regelkörper (55) und der Kegel (58) eine Innenbohrung (59) aufweisen oder der Vorverstärker (29) eine zusätzliche Kammer (82) aufweist, welche mit der Längsbohrung (57) in Verbindung steht, welcher ein seitlicher Schlitz (94) zugeordnet ist.

3. Regler nach Anspruch 1 oder 2, dadurch gekennzeichnet, daß der Regelkörper (55) einen kugelförmigen Teil (84) im Vorverstärker (29) aufweist und ein Kern (60) des Membranpaketes (38) eine Hülse (86) aufweist, wobei durch wenigstens eine radiale Bohrung (88) und einen Regelspalt (75) Zuluft in eine Kammer (54) des Vorverstärkers (29) strömen kann.

4. Regler nach einem der Ansprüche 1 bis 3, dadurch gekennzeichnet, daß das Gehäuse (1) eine senkrecht zur Längsbohrung (57) angeordnete und in diese mündende Querbohrung (44) aufweist, über welche das Druckmittel dem Volumenverstärker (63) zuführbar ist, daß die Querbohrung (44) für das Druckmittel und eine Bohrung (72) für die Stellgröße im Gehäuse (1) in unterschiedlichen Ebenen angeordnet sind.

5. Regler nach einem der Ansprüche 1 bis 4, dadurch gekennzeichnet, daß der Vorverstärker (29) in einer Bohrung (35) angeordnet ist, die eine Ringschulter (43) enthält, auf welcher ein Membranpaket (38) abgestützt und mittels eines Abschlußdeckels (30) eingespannt ist.

6. Regler nach einem der Ansprüche 1 bis 5, dadurch gekennzeichnet, daß der Wandler einen Membranteller (15) aufweist, der lose auf der Membran (24) aufliegt und/oder mittels eines Deckels (25) auf einer Ringschulter (26) eingespannt ist, und/oder daß der Wandler eine Welle (12) mit einem Vierkant aufweist, auf welchen die Meßfeder (11) mit ihrem entsprechend geformten Ende, bevorzugt lose, aufgesteckt ist.

7. Regler nach einem der Ansprüche 1 bis 6, dadurch gekennzeichnet, daß der Vorverstärker (29) einen Abschlußdeckel (30) mit einem Innengewinde (32) aufweist, mit welchem ein Prallplattenhalter (2) verbunden ist.

8. Regler nach Anspruch 7, dadurch gekennzeichnet, daß der Prallplattenhalter (2) mittels einer Hohlschraube (3) befestigt und/oder zur Invertierung wahlweise um 180° gedreht befestigbar ist und/oder daß der Prallplattenhalter (2) eine Durchgangsbohrung (74) für die Hohlschraube (3) aufweist und / oder die Düse (5) enthält, die integraler Bestandteil des Prallplattenhalters (2) ist.

9. Regler nach einem der Ansprüche 1 bis 8, dadurch gekennzeichnet, daß der Vorverstärker drei Kammern (46, 48, 54) aufweist, die mittels Membranen (40, 42) voneinander getrennt sind, wobei in die mittlere Kammer (48) von der mit Druckmittel beaufschlagten Querbohrung (44) über eine weitere Bohrung (53) konstant Druckmittel zugeführt wird.

10. Regler nach einem der Ansprüche 1 bis 9, dadurch gekennzeichnet, daß im Membranpaket des Vorverstärkers eine Kappe (56) lose gelagert ist, die mit dem Kegel (58) des Volumenverstärkers (63) zusammenwirkt.

11. Regler nach einem der Ansprüche 1 bis 10, dadurch gekennzeichnet, daß der Kegel (58) eine Überströmbohrung (76) aufweist, durch welche Druckmittel bevorzugt durch die Innenbohrung (59) zu einem Regelspalt (75) im Vorverstärker zwecks Feinregelung gelangt, wobei die Überströmbohrung (76) bevorzugt im Bereich der Querbohrung (44) mit im wesentlichen paralleler Achse zu letzterer angeordnet ist, und/oder daß der Regelspalt (75) zwischen der insbesondere ringförmigen Endfläche des Kegels (58) und der Kappe (56) in der unteren Kammer (54) des Vorverstärkers (29) angeordnet ist.

12. Regler nach einem der Ansprüche 1 bis 11, dadurch gekennzeichnet, daß der für die Grobregelung vorgesehene Regelspalt (61) des Volumenverstärkers (63) zwischen der bevorzugt konischen Außenfläche des Kegels (58) und einer Sitzfläche des Gehäuses (1) vorhanden ist, wobei zwischen dem zylindrischen oberen Teil des Kegels (58) und der Innenwand der Längsbohrung (57) ein breiter Ringspalt vorhanden ist, durch welchen Druckmittel aus der Querbohrung (44) im wesentlichen ungehindert bis zum Regelspalt (61) in den Volumenverstärker (63) strömen kann.

13. Regler nach einem der Ansprüche 1 bis 12, dadurch gekennzeichnet, daß der Wandler ein Düsen-Prallplatten -System enthält, dessen Prallplatte (4) als elektrostriktives, bevorzugt bimorphes Element ausgebildet ist, welchem über einen elektronischen Regler (110) das Eingangssignal bzw. die Führungsgröße und der Ist-Wert zuführbar sind.

14. Regler nach einem der Ansprüche 1 bis 13, dadurch gekennzeichnet, daß aus der elektrischen Führungsgröße die elektrische Hilfsenergie für den elektronischen Regler gebildet wird, wobei der Ist-Wert-Sensor (112) bevorzugt hochohmig ausgebildet ist.

15. Regler nach Anspruch 13 oder 14, dadurch gekennzeichnet, daß die Prallplatte (4) bezüglich der Düsenebene (124) um einen Winkel (126) geneigt angeordnet ist, wobei insbesondere mit einem Körper (128) die winkelgerechte Zustellung von Prallplatte (4) und gegenüberliegender Düse (5) vorgegeben wird.

16. Regler nach einem der Ansprüche 13 bis 15, dadurch gekennzeichnet, daß die Führungsgröße als ein elektrisches Signal über einen elektro-pneumatischen Wandler (132) zugeführt wird, welcher mit dem Gehäuse (1) direkt und/oder mittels Säulen (136, 138) verbunden ist, wobei die pneumatische Verbindung, mittels Längsbohrungen (137, 139) in den genannten Säulen (136, 138) erfolgt und/oder das Gehäuse (1) eine Querbohrung (144) für die Zuluft sowie einen Verbindungskanal (146) für die pneumatische Führungsgröße zum Meßwerk aufweist.

## Claims

1. Pneumatic regulator, particularly an electro pneumatic position regulator, having a housing (1), having a convertor (11,24) which can be supplied with a reference input (16) and an actual reading, and having a volume amplifier (63) acted upon by pressure medium and controlled by the convertor, characterised in that a pre-amplifier (29) and the volume amplifier (63) are integrated in the housing and connected to one another by means of a regulating member (55), which has a cone (58) of the volume amplifier (63), and by a longitudinal bore (57) in the housing (1).

2. Regulator according to claim 1, characterised in that the regulator member (55) and the cone (58) have an internal bore (59) or the pre-amplifier (29) has an additional chamber (82) which communicates with the longitudinal bore (57), said bore having a lateral slot (94) associated therewith.

3. Regulator according to claim 1 or 2, characterised in that the regulator member (55) has a spherical part (84) in the pre-amplifier (29) and a core (60) of the diaphragm stack (38) has a sleeve (86), whereby an air supply is able to flow into a chamber (54) of the pre-amplifier (29) through at least one radial bore (88) and a regulating slot (75).

4. Regulator according to one of claims 1 to 3, characterised in that the housing (1) has a transverse bore (44) arranged perpendicularly to the longitudinal bore (57) and opening into it, by means of which the pressure medium can be supplied to the volume amplifier (63), the transverse bore (44) for the pressure medium and a bore (72) for the regulating quantity in the housing (1) being arranged in different planes.

5. Regulator according to one of claims 1 to 4, characterised in that the pre-amplifier (29) is arranged in a bore (35) which contains an annular shoulder (43) on which a diaphragm stack (38) is supported and clamped in position by means of a closing cover (30).

6. Regulator according to one of claims 1 to 5, characterised in that the convertor has a diaphragm plate (15) which rests loosely on the diaphragm and/or is clamped in position on an annular shoulder (26) by means of a cover (25) and/or the convertor has a four-cornered shaft (12) on which the measuring spring (11) is placed, preferably loosely, with its correspondingly shaped end.

7. Regulator according to one of claims 1 to 6, characterised in that the pre-amplifier (29) has a closure cover (30) with an internal thread (32) to which an impact plate holder (2) is connected.

8. Regulator according to claim 7, characterised in that the impact plate holder (2) is secured by means of a hollow screw (3) and/or is adapted to be fixed selectively after turning through 180°, for inversion, and/or the impact plate holder (2) has a through-bore (74) for the hollow screw (3) and/or contains the nozzle (5) which is an integral part of the impact plate holder (2).

9. Regulator according to one of claims 1 to 8, characterised in that the pre-amplifier has three chambers (46,48,54) separated from another by means of diaphragms (40,42), whereby pressure medium is constantly supplied to the central chamber (48) from the transverse bore (44) acted upon by pressure medium, through another bore (53).

10. Regulator according to one of claims 1 to 9, characterised in that a cap (56) which cooperates with the cone (58) of the volume amplifier (63) is loosely mounted in the diaphragm stack of the pre-amplifier.

11. Regulator according to one of claims 1 to 10, characterised in that the cone (58) has an overflow bore (76) through which pressure medium preferably passes through the inner bore (59) to a regulating slot (75) in the pre-amplifier for the purpose of fine adjustment, the overflow bore (76) preferably being arranged in the region of the transverse bore (44) with its axis substantially parallel to the axis of said bore (44), and/or the regulator slot (75) is arranged between the, in particular, annular end face of the cone (58) and the cap (56) in the lower chamber (54) of the pre-amplifier (29).

12. Regulator according to one of claims 1 to 11, characterised in that the regulating slot (61) of the volume amplifier (63) provided for coarse adjustment is located between the preferably conical outer surface of the cone (58) and a seating surface of the housing (1), whilst between the cylindrical upper part of the cone (58) and the inner wall of the longitudinal bore (57) there is a wide annular slot through which pressure medium can flow from the transverse bore (44) substantially unimpeded to the regulating slot (61) and into the volume amplifier (63).

13. Regulator according to one of claims 1 to 12, characterised in that the convertor contains a nozzle-impact plate system, the impact plate (4) of which is constructed as an electrostrictive, preferably bimorphous element to which the input signal or reference input and actual reading can be supplied through an electronic regulator (110).

14. Regulator according to one of claims 1 to 13, characterised in that the electrical auxiliary energy for the electronic regulator is formed from the electrical reference input, whilst the actual value sensor (112) is preferably highly resistive in the construction.

15. Regulator according to claim 13 or 14, characterised in that the impact plate (4) is arranged at an angle (126) relative to the nozzle plate (124), the proper angular positioning of the impact plate (4) and opposing nozzle (5) being fixed, in particular, by a body (128).

16. Regulator according to one of claims 13 to 15, characterised in that the reference input is supplied as an electrical signal through an electro pneumatic convertor (132) which is connected to the housing (1) either directly and/or by means of columns (136,138), the pneumatic connection being effected by means of longitudinal bores (137,139) in said columns (136,138) and/or the housing (1) having a transverse bore (144) for the air supply and a connecting channel (146) for the pneumatic reference input to the measuring means.

**Revendications**

1. Régulateur pneumatique, notamment régulateur de position électropneumatique comprenant un boîtier (1), un transducteur (11, 24), auquel peuvent être transmises une grandeur de référence (16) et une valeur réelle, et un amplificateur de volume (63) chargé par un fluide de pression, et qui est commandé par le transducteur, *caractérisé en ce qu'*un pré-amplificateur (29) et l'amplificateur de volume (63) sont intégrés dans le boîtier et sont en communication entre eux par l'intermédiaire d'un élément de régulateur (55) qui présente un cône (58) de l'amplificateur de volume (63), ainsi que par un perçage longitudinal (57) du boîtier (1).

2. Régulateur selon la revendication 1, *caractérisé en ce que* l'élément de régulateur (55) et le cône (58) présentent un perçage intérieur (59) ou le pré-amplificateur (29) présente une chambre supplémentaire (82) qui est en communication avec le perçage longitudinal (57) auquel est associée une fente latérale (94).

3. Régulateur selon la revendication 1 ou 2, *caractérisé en ce que* le corps de régulateur (55) présente une partie sphérique (84) contenue dans le pré-amplificateur (29) et le noyau (60) du paquet de membranes (38) présente une douille, l'air d'alimentation pouvant pénétrer dans une chambre (54) du pré-amplificateur (29) en passant à travers au moins un perçage radial (88) et une fente de régulation (75).

4. Régulateur selon une des revendications 1 à 3, *caractérisé en ce que* le boîtier (1) présente un perçage transversal (44) disposé perpendiculairement au perçage longitudinal (57) et débouchant dans celui-ci, et par lequel le fluide de pression peut être envoyé à l'amplificateur de volume (63), *en ce que* le perçage transversal (44) servant à la transmission du fluide de pression, et un perçage (72) servant à la transmission de la grandeur de commande, sont disposés dans des plans différents dans le boîtier (1).

5. Régulateur selon une des revendications 1 à 4, *caractérisé en ce que* le pré-amplificateur (29) est disposé dans un perçage (35) qui présente un épaulement annulaire (43) sur lequel le paquet de membranes (38) prend appui et est serré au moyen d'un couvercle de fermeture (30).

6. Régulateur selon une des revendications 1 à 5, *caractérisé en ce que* le transducteur présente un plateau de membrane (15) qui repose librement sur la membrane (24) *et/ou* est serré sur un épaulement annulaire (26) au moyen d'un couvercle (25), *et/ou en ce que* le transducteur présente un arbre (12) muni d'un carré sur lequel le ressort de mesure (11) est emboîté, de préférence sans fixation rigide, par son extrémité munie d'une forme complémentaire.

7. Régulateur selon une des revendications 1 à 6, *caractérisé en ce que* le pré-amplificateur (29) présente un couvercle de fermeture (30) muni d'un filetage intérieur (32) auquel est relié un support de volet (2).

8. Régulateur selon la revendication 7, *caractérisé en ce que* le support de volet (2) est fixé au moyen d'une vis creuse (3) *et/ou* peut être fixé sélectivement dans une position retournée de 180°, pour l'inversion *et/ou en ce que* le support de volet (2) présente un perçage traversant (74) pour loger la vis creuse (3) *et/ou* contient la douille (5) qui fait partie intégrante du support de volet (2).

9. Régulateur selon une des revendications 1 à 8, *caractérisé en ce que* le pré-amplificateur comporte trois chambres (46, 48, 54) qui sont séparées les unes des autres par des membranes (40, 42), un fluide de pression étant acheminé en permanence dans la chambre centrale (48) en provenance du perçage transversal (44) chargé par le fluide de pression, par l'intermédiaire d'un autre perçage (53).

10. Régulateur selon une des revendications 1 à 9, *caractérisé en ce que*, dans le paquet de membranes du pré-amplificateur, est monté librement un chapeau (56) qui coopère avec le cône (58) de l'amplificateur de volume (63).

11. Régulateur selon une des revendications 1 à 10, *caractérisé en ce que* le cône (58) présente un perçage de décharge (76) à travers lequel le fluide de pression parvient de préférence à travers le perçage intérieur (59) à une fente de régulation (75) disposée dans le pré-amplificateur pour assurer la régulation fine, le perçage de décharge (76) étant de préférence disposé dans la région du perçage transversal (44), avec son axe sensiblement parallèle à ce dernier *et/ou en ce que* la fente de régulation (75) est disposée entre la surface terminale, notamment annulaire, du cône (58) et le chapeau (56) dans la chambre inférieure (54) du pré-amplificateur (29).

12. Régulateur selon une des revendications 1 à 11, *caractérisé en ce que* la fente de régulation (61) de l'amplificateur de volume (63) qui est prévu pour la régulation approchée est prévue entre la surface extérieure, de préférence conique, du cône (58) et une surface d'appui du boîtier (1), cependant qu'entre la partie supérieure cylindrique du cône (58) et la paroi intérieure du perçage longitudinal (57) est prévue une large fente annulaire, à travers laquelle le fluide de pression peut s'écouler du perçage transversal (44) dans l'amplificateur de volume (63) sensiblement sans obstacle jusqu'à la fente de régulation (61).

13. Régulateur selon une des revendications 1 à 12, *caractérisé en ce que* le transducteur renferme un système buse-volet dont le volet (4) est constitué par un élément électrostrictif, de préférence bimorphe, auquel le signal d'entrée ou la grandeur de référence et la valeur réelle peuvent être acheminées par l'intermédiaire d'un régulateur électronique (110).

**14.** Régulateur selon une des revendications 1 à 13, *caractérisé en ce que* l'énergie auxiliaire électrique pour le régulateur électronique est formée à partir de la grandeur de référence électrique, le capteur de valeur réelle (112) étant de préférence d'une configuration à haute valeur ohmique.

**15.** Régulateur selon la revendication 13 ou 14, *caractérisé en ce que* le volet (4) est disposé dans une position inclinée d'un certain angle (126) par rapport au plan (124) de la buse, la position relative angulaire correcte entre le volet (4) et la buse (5) qui lui fait face étant fixée en particulier au moyen d'un élément (128).

**16.** Régulateur selon une des revendications 13 à 15, *caractérisé en ce que* la grandeur de référence est acheminée sous la forme d'un signal électrique par l'intermédiaire d'un transducteur électropneumatique (132) qui est assemblé au boîtier (1), directement et/ou à l'aide de colonnettes (136, 138), la liaison pneumatique s'effectuant au moyen de perçages longitudinaux (137, 139), ménagés dans lesdites colonnettes (136, 138), et le boîtier (1) présentant un perçage transversal (144) pour l'air d'alimentation ainsi qu'un canal de liaison (146) pour la transmission de la grandeur de référence pneumatique au mécanisme de mesure.

FIG.1

FIG.2

FIG.3

# FIG. 4

FIG.5

FIG. 6

EP 0 216 206 B1

FIG.7

$U_E$

$U_S$

FIG.8

$s > s^1$

FIG.9

FIG.11

FIG.10